# EUROPÄISCHE PATENTSCHRIFT

(11) **EP 2 886 301 B1**
(45) Veröffentlichungstag und Bekanntmachung des Hinweises auf die Patenterteilung: **15.04.2020**
(21) Anmeldenummer: 13198457.7
(22) Anmeldetag: 19.12.2013
(51) Int. Cl.: B29C 63/00, B29C 65/16, B27D 5/00, B29C 65/48, A47B 96/20, B29L 31/44

(54) **VERFAHREN ZUR ANBRINGUNG VON KANTENBÄNDERN AN MÖBELPLATTEN**
METHOD FOR APPLYING EDGE STRIPS TO FURNITURE PANELS
PROCÉDÉ D'APPLICATION DE BANDES DE BORDURE SUR DES PLAQUES DE MEUBLES

(43) Veröffentlichungstag der Anmeldung: 24.06.2015
(73) Patentinhaber: REHAU AG + Co, 95111 Rehau (DE)
(72) Erfinder: Wermescher, André, 91358 Kunreuth (DE)

(56) Entgegenhaltungen:
- EP-A1- 1 852 242
- EP-A2- 2 653 513
- DE-U1-202009 011 403
- BOGLEA A L ET AL: "Neue Strahlquellen erweitern Anwendungsbereich", KUNSTSTOFFE, CARL HANSER VERLAG, MUNCHEN, DE, vol. 97, no. 12, 1 December 2007 (2007-12-01), pages 133-137, XP001510731, ISSN: 0023-5563

## Beschreibung

Die Erfindung betrifft ein Verfahren zur Anbringung von Kantenbändern an Möbelplatten, wobei mittels eines Lasers ein Kantenband mit einer Oberfläche aus Kunststoff an dieser Oberfläche aufgeschmolzen und, vorzugsweise danach, an eine Möbelplatte gefügt wird.

Die Befestigung von polymeren Kantenbändern an Möbelplatten aus Holz, welche in der Regel als Pressspan- oder MDF-Platten ausgebildet sind, ist ein seit langer Zeit gängiges Verfahren, um an den Schmalseiten dieser Möbelplatten eine optisch und auch funktionell einwandfreie Abdeckung der Möbelplatte zu erreichen. Die Befestigung kann beispielsweise mittels eines Schmelzklebers erfolgen, der z.B. unmittelbar vor dem Fügen des Kantenbandes an die Möbelplatte auf das Kantenband aufgetragen wird.

Ein Verfahren mit den eingangs beschriebenen Merkmalen ist aus der EP 1 163 864 B1 bekannt. In diesem Stand der Technik wird vorgeschlagen, dass ein Laserlicht mit einer Wellenlänge im Bereich von 0,7 bis 30 µm, vorzugsweise 0,8 bis 1,0 µm, verwendet wird. Im Falle des letztgenannten Spektrums von 800 bis 1.000 nm sollen beispielsweise Dioden-Laser oder Halbleiter-Laser zum Einsatz kommen. Die Wellenlängen von 800 bis 1.000 nm sind für derartige Laser typisch. In der EP 1 163 864 B1 wird ferner vorgeschlagen, vorzugsweise lediglich den oberen und unteren Randbereich des Kantenbandes mittels Laserlicht zu aktivieren, so dass entsprechend keine vollflächige Verbindung des Kantenbandes mit der Möbelplatte vorliegt.

Die technische Umsetzung der in der EP 1 163 864 B1 beschriebenen Verfahrensweise gelang erst durch die Entwicklung entsprechend geeigneter Kantenbänder, wie sie beispielsweise in der DE 20 2007 011 911 U1 beschrieben sind. In dieser Schrift wird vorgeschlagen, das Kantenband mit einer an die Möbelplatte zu fügenden Schmelzschicht auszustatten, welche sowohl polare als auch unpolare Anteile im Molekülaufbau aufweist. Durch die unpolaren Anteile soll zweckmäßigerweise einerseits gewährleistet sein, dass die Schmelzschicht eine gute chemische Anbindung an das eigentliche Kantenband besitzt, welches beispielsweise aus einem unpolaren Polypropylen besteht. Die polaren Anteile im Molekülaufbau hingegen sollen gleichzeitig eine gute chemisch Anbindung an die Zellulose der Möbelplatte sicherstellen, welche einen polaren Charakter besitzt. Die Schmelzschicht dient folglich vorzugsweise als "chemische Brücke" zwischen der polaren Möbelplatte und dem unpolaren Kantenband-Material. Um die Absorptionsfähigkeit des Laserlichts insbesondere in der Schmelzschicht zu verbessern, wird in der DE 20 2007 011 911 U1 vorgeschlagen, diese mit Laserpigmenten auszustatten. Die in dem genannten Dokument beschriebene technische Entwicklung hat sich in der Praxis bewährt, da sie insbesondere eine fugenfreie Anbindung des Kantenbandes an die Möbelplatte im Sinne einer "Nullfuge" ermöglicht. Die fertig hergestellte Möbelplatte wirkt "wie aus einem Guss" und behält diese einwandfreie Optik dauerhaft bei, da sich im Übergangsbereich von Möbelplatte zum Kantenband kein Schmutz ansammeln kann. Allerdings sind Laserpigmente vergleichsweise teuer und die Herstellung eines mindestens zweischichtigen Kantenbandes mit der erwähnten Schmelzschicht führt im Vergleich zu einem einschichtigen Kantenband zu einem erhöhten Fertigungsaufwand.

Die EP 1 852 242 A1 beschreibt ein laserfügbares Kantenband mit einer Deckleiste, die mit einer Schmelzklebstoffschicht koextrudiert ist. Das Laserabsorptionsverhalten der Klebstoffschicht wird hierbei insbesondere durch die Zugabe von Füllstoffen beeinflusst.

Vor dem beschriebenen Hintergrund liegt der Erfindung die Aufgabe zugrunde, ein Verfahren mit den eingangs beschriebenen Merkmalen anzugeben, das eine sehr kostengünstiges Laserverfahren zur Herstellung einer entsprechenden Möbelplatte mit daran gefügtem Kantenband ermöglicht.

Diese Aufgabe wird durch die Merkmale des Patentanspruchs 1 gelöst. Erfindungsgemäß emittiert der Laser Laserlicht mit einer Wellenlänge zwischen 1.100 nm und 2.200 nm, vorzugsweise zwischen 1.400 nm und 2.000 nm, wobei die gewählte Wellenlänge auf das Absorptionsband des Kunststoffes abgestimmt wird. Erfindungsgemäß wird also für das Laserlicht eine Wellenlänge gewählt, welches unmittelbar von herkömmlichen Polymeren absorbiert werden können. Dies ist beispielsweise bei den im Stand der Technik gängigen Dioden-Lasern nicht der Fall, da diese in einem Längenbereich von 800 bis 1.000 nm arbeiten. In diesem Wellenspektrum erfolgt keine Anregung herkömmlicher Kunststoffe, wie beispielsweise Polypropylen, ABS oder dergleichen. Daher sind beim Einsatz derartiger Dioden-Laser im Stand der Technik regelmäßig die zuvor bereits erwähnten Laserpigmente im Kantenband erforderlich.

Die erfindungsgemäßen Wellenlängen können beispielsweise durch mit Thulium und/oder Erbium dotierten Laserdioden erzeugt werden. Dioden-Laser zeichnen sich durch eine kompakte Bauform und vergleichsweise niedrige Kosten aus. Im Rahmen der Erfindung liegt es insbesondere, bereits im Betrieb befindliche, mit üblichen im Wellenlängenbereich von 800 bis max. 1070 nm arbeitenden Dioden-Lasern ausgerüstete Anlagen zum Laserfügen von Kantenbändern so nachzurüsten, dass sie Laserlicht mit erfindungsgemäßer Wellenlänge emittieren. Der Investitionsaufwand zur Durchführung des erfindungsgemäßen Verfahrens ist in diesem Fall besonders niedrig. Mittels des erfindungsgemäßen Verfahren ist es problemlos möglich, das Kantenband - entgegen der Lehre aus EP 1 163 864 B1 - vollflächig mit der entsprechenden Schmalseite der Möbelplatte zu verbinden.

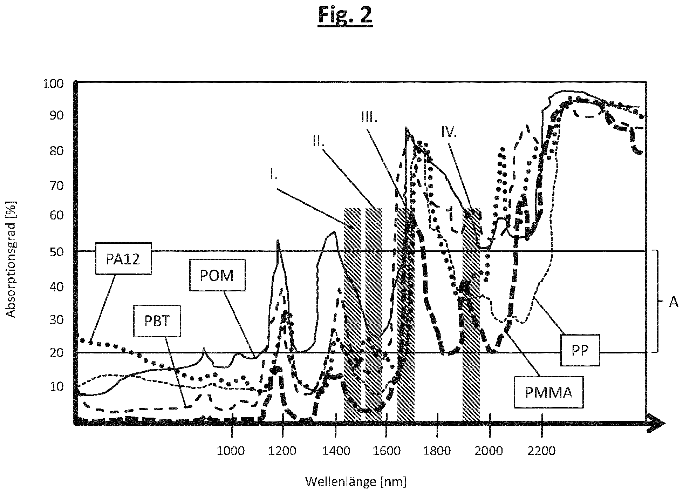

Zweckmäßigerweise wird die Wellenlänge so auf das Absorptionsband des Kunststoffes abgestimmt, dass der Kunststoff bei dieser Wellenlänge einen Absorptionsgrad für das Laserlicht im Bereich von 10 - 90 %, z.B. 20 - 80 %, insbesondere 20 - 50 %, vorzugsweise 30 - 50 %, aufweist. Der Absorptionsgrad gibt an, welcher Anteil der Leistung der auftreffenden Laserlichtwelle von der Oberfläche des Kunststoffes absorbiert, also aufgenommen wird. Hierdurch ist einerseits gewährleistet, dass der Kunststoff durch das Laserlicht aktiviert und somit aufgeschmolzen werden kann. Andererseits ist der Absorptionsgrad nicht so groß, dass der Kunststoff unkontrolliert aufschmilzt, sondern es kann ein kontrolliertes Aufschmelzen nur im oberflächennahen Bereich des Kantenbandes erfolgen. Sofern keine vollständige Absorption des Laserlichts vorliegt, ist es möglich, über die Fokuslage und Schärfentiefe des Laserstrahls gezielt das Kantenband bis zu einer definierten Tiefe, also letztlich ein definiertes Teilvolumen des Kantenbandes aufzuschmelzen. Man ist hier nicht auf Wärmeleitungseffekte angewiesen, so wie es beispielsweise bei aktuell gängigen Schweißverfahren mit vollständiger Absorption des Laserlichts notwendig ist. Die Fig. 2 im Ausführungsbeispiel zeigt für verschiedene Kunststoffe den Absorptionsgrad in Abhängigkeit der Wellenlänge des Laserlichts.

Im Rahmen der Erfindung liegt es beispielsweise, dass die Wellenlänge im Bereich von 1.440 bis 1.500 nm liegt. Dieses Spektrum ist z.B. insbesondere für die Aktivierung von POM (Polyoxymethylen) und PBT (Polybutylenterephthalat) geeignet (vergl. Spektrum I. in Fig. 2). Insbesondere kann die Wellenlänge im Bereich 1.460 bis 1.480 nm liegen.

Alternativ kann die Wellenlänge auch im Bereich von 1.520 bis 1.580 nm, insbesondere im Bereich von 1.550 bis 1.570 nm liegen. Dieses Spektrum, welches in Fig. 2 mit II. gekennzeichnet ist, ist insbesondere zur Aktivierung von POM und PA12 geeignet.

Ebenso ist es im Rahmen der Erfindung möglich, dass die Wellenlängen im Bereich von 1.620 bis 1.680 nm, insbesondere 1.640 bis 1.660 nm liegen. Dieses Spektrum, welches in Fig. 2 mit III. gekennzeichnet ist, kann z.B. zur Aktivierung von PMMA, PP oder auch wiederum PA12 genutzt werden .

Alternativ hierzu wiederum kann es ebenfalls zweckmäßig sein, eine Wellenlänge im Bereich von 1.910 bis 1.970 nm zu wählen. Dieses Spektrum (in Fig. 2 mit IV. gekennzeichnet) ist, eignet sich im Rahmen der Erfindung ebenfalls insbesondere zur Aktivierung von PMMA, PP oder PA12.

Erfindungsgemäß ist das Kantenband frei von Laserpigmenten. Wie zuvor beschrieben, reicht das speziell ausgewählte Laserlicht alleine aus, um eine entsprechende Aktivierung und daher Erwärmung / Aufschmelzung des Kunststoffes zu bewirken, ohne dass diese Pigmente erforderlich sind. Dies führt zu einer deutlichen Kosteneinsparung.

Erfindungsgemäß besteht das Kantenband ferner aus einem polaren Polymer, insbesondere PMMA, ABS oder PVC, welches direkt an die ebenfalls polare Möbelplatte gefügt wird. Das Kantenband ist hierbei einschichtig ausgebildet.

Das Kantenband kann eine Gesamtdicke von 0,3 bis 5 mm, vorzugsweise 0,7 bis 3 mm, aufweisen. Die Schmelzschicht weist zweckmäßigerweise eine Dicke von 0,1 bis 1,5 mm, vorzugsweise 0,2 bis 0,5 mm auf.

Gegenstand der Erfindung ist auch eine Möbelplatte mit einem daran befestigten polymeren Kantenband, hergestellt nach dem erfindungsgemäßen Verfahren.

Im Folgenden wird die Erfindung anhand einer lediglich ein Ausführungsbeispiel darstellenden Zeichnung ausführlich erläutert. Es zeigen schematisch:
- Fig. 1: eine schematische und perspektivische Ansicht einer Möbelplattenkante mit einer teilweise angebundenen Kantenleiste zur Erläuterung des erfindungsgemäßen Verfahrens und
- Fig. 2: ein Diagramm, welches die Absorption von dem Absorptionsgrad von verschiedenen Kunststoffen über die Wellenlänge von Laserlicht aufzeigt.

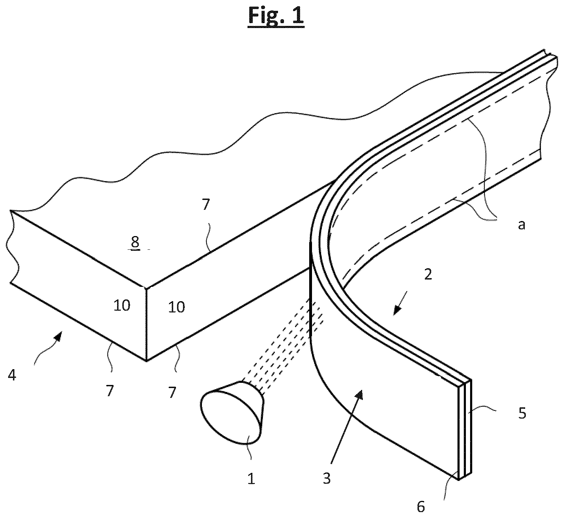

Fig. 1 zeigt ein Verfahren, bei dem mittels eines Dioden-Lasers 1 ein Kantenband 2 mit einer Oberfläche 3 aus Kunststoff an dieser Oberfläche 3 aufgeschmolzen und danach mit dieser Oberfläche 3 an eine Schmalseite 10 einer Möbelplatte 4 gefügt wird. Das emittierte Laserlicht besitzt eine Wellenlänge im Bereich zwischen 1.400 nm und 2.000 nm, wobei die gewählte Wellenlänge auf das Absorptionsband des Kunststoffs an der aufzuschmelzenden Oberfläche 3 des Kantenbandes 2 abgestimmt wird. Hierdurch kann mit dem Laserlicht ein direktes Aufschmelzen der dem Möbelstück 4 zugewandten Oberfläche 3 des Kantenbandes 2 erfolgen, ohne dass der Einsatz von Laserpigmenten erforderlich ist. Es können unterschiedliche Absorptionsbänder eingesetzt werden, welche sich jeweils nach dem eingesetzten Werkstoff an der Oberfläche 3 des Kantenbandes 2 richten. Im Ausführungsbeispiel liegt die Wellenlänge im Bereich von 1.620 ÷ 1.680 oder 1.910 ÷ 1.970 nm.

In einer nicht erfindungsgemäßen Ausführungsform ist das Kantenband 2 mehrschichtig ausgebildet und weist eine polymere Strukturschicht 5 sowie eine an die Möbelplatte 4 zu fügende polymere Schmelzschicht 6 auf. Die Strukturschicht 5 besteht aus einem unpolaren Kunststoff, nämlich PP. Die Schmelzschicht 6 weist hingegen sowohl polare als auch unpolare Komponenten im Molekülaufbau auf, so dass eine chemische Anbindung der unpolaren Strukturschicht 5 aus PP an das polare Material der Möbelplatte 4 (Zellulose) ermöglicht wird. Die Schmelzschicht 6 besitzt ebenfalls PP als Basismaterial und enthält ein MAH-gepfropftes Polypropylen. Wie insbesondere anhand einer nachfolgenden Betrachtung der Fig. 2 zu erkennen ist, ist somit die Wellenlänge des Laserlichts auf das Absorptionsband von Polypropylen, welches das Basismaterial der Schmelzschicht 6 darstellt, abgestimmt. Das Kantenband 2 weist ober- und unterseitig einen Überstand ab, der nach der Befestigung des Kantenbandes 2 abgezogen wird, um einen bündigen Abschluss des Kantenbandes 2 mit den Kanten 7 der beiden Frontflächen 8 der Möbelplatte 4 herzustellen, der durch die gestichelten Linien a gekennzeichnet ist.

Erfindungsgemäß besteht das Kantenband insgesamt aus einem polaren Polymer, beispielsweise PMMA, ABS, oder PVC, und ist einschichtig ausgebildet, da ja eine Anbindung eines polaren Kantenbandwerkstoffes an eine polare Möbelplatte erforderlich ist und das Laserlicht direkt die Moleküle des polaren Kunststoffes des Kantenbandes aktivieren kann.

Die Fig. 2 zeigt den Absorptionsgrad diverser Kunststoffe für Laserlicht über die entsprechende Laserlicht-Wellenlänge aufgetragen. Dargestellt sind PA 12, PBT, PMMA; POM und PP. Zu beachten ist, dass keine beliebige Einstellung der Wellenlänge des Lasers möglich ist, sondern aus physikalischen Gründen immer nur spezielle gezielte Wellenlängen technisch umsetzbar sind.

Die Fig. 2 zeigt insgesamt vier (mit I. bis IV.) gekennzeichnete Spektren, welche innerhalb der erfindungsgemäßen Lehre liegen. Das Spektrum I. deckt Wellenlängen im Bereich von 1.440 bis 1.500 nm ab. Dieses Spektrum ist insbesondere für die Aktivierung von POM (Polyoxymethylen) und PBT (Polybutylenterephthalat) geeignet, da POM bzw. PBT in diesem Spektrum einen Absorptionsgrad im Bereich A von 20 - 50 % aufweisen, der zum gezielten Aufschmelzen der Oberfläche günstig ist.

Spektrum II. deckt Wellenlängen im Bereich von 1.520 bis 1.580 nm ab. Dieses Spektrum ist aus den vorstehend genannten Gründen insbesondere zur Aktivierung von POM und PA12 geeignet.

Im Spektrum III. liegen Wellenlängen im Bereich von 1.620 bis 1.680 nm. Wellenlängen in diesem Bereich können insbesondere zur Aktivierung von PMMA, PP oder auch wiederum PA12 genutzt werden. Das Spektrum IV. betrifft Wellenlänge im Bereich von 1.910 bis 1.970 nm und ist ebenfalls insbesondere zur Aktivierung von PMMA, PP oder PA12 geeignet.

## Patentansprüche

1. Verfahren zur Anbringung von Kantenbändern an Möbelplatten, wobei mittels eines Lasers (1) ein Kantenband (2) mit einer Oberfläche (3) aus Kunststoff an dieser Oberfläche (3) aufgeschmolzen und, vorzugsweise danach, an eine Möbelplatte (4) gefügt wird, wobei das Kantenband (2) aus einem polaren Polymer, insbesondere PMMA, ABS oder PVC, besteht, und wobei das Kantenband (2) frei von Laserpigmenten ist, **dadurch gekennzeichnet, dass** der Laser (1) Laserlicht mit einer Wellenlänge zwischen 1.100 nm und 2.200 nm, vorzugsweise zwischen 1.400 nm und 2.000 nm, emittiert, wobei die gewählte Wellenlänge auf das Absorptionsband des Kunststoffes abgestimmt wird, und dass das Kantenband (2) einschichtig ausgebildet ist, welches direkt an die ebenfalls polare Möbelplatte gefügt wird.

2. Verfahren nach Anspruch 1, **dadurch gekennzeichnet, dass** die Wellenlänge
- im Bereich von 1.440 bis 1.500 nm oder
- im Bereich von 1.520 bis 1.580 nm oder
- im Bereich von 1.620 bis 1.680 nm oder
- im Bereich von 1.910 bis 1.970 nm liegt.

3. Verfahren nach Anspruch 1 oder 2, **dadurch gekennzeichnet, dass** die Wellenlänge so auf das Absorptionsband des Kunststoffes abgestimmt wird, dass der Kunststoff bei dieser Wellenlänge einen Absorptionsgrad für das Laserlicht im Bereich von 20 - 80 %, vorzugsweise 30 - 50 %, aufweist.

4. Verfahren nach einem der Ansprüche 1 bis 3, **dadurch gekennzeichnet, dass** der Laser (1) als Diodenlaser ausgebildet ist.

5. Möbelplatte (4) mit einem daran befestigten polymeren Kantenband (2), hergestellt nach einem Verfahren nach einem der Ansprüche 1 bis 4.

## Claims

1. Method for applying edge strips to furniture panels, wherein an edge strip (2) having a surface (3) made of plastics material is fused to this surface (3) by means of a laser (1) and, preferably thereafter, is joined to a furniture panel (4), wherein the edge strip (2) consists of a polar polymer, in particular PMMA, ABS or PVC, and wherein the edge strip (2) is free of laser pigments, **characterised in that** the laser (1) emits laser light at a wavelength of between 1,100 nm and 2,200 nm, preferably of between 1,400 nm and 2,000 nm, wherein the selected wavelength is adapted to the absorption band of the plastics material, and **in that** the edge strip (2) is single-layered, which is directly joined to the likewise polar furniture panel.

2. Method according to claim 1, **characterised in that** the wavelength is
- in the range of from 1,440 to 1,500 nm or
- in the range of from 1,520 to 1,580 nm or
- in the range of from 1,620 to 1,680 nm or
- in the range of from 1,910 to 1,970 nm.

3. Method according to claim 1 or 2, **characterised in that** the wavelength is adapted to the absorption band of the plastics material such that, at this wavelength, the plastics material has a degree of absorption for the laser light in the range of 20-80%, preferably 30-50%.

4. Method according to any of claims 1 to 3, **characterised in that** the laser (1) is configured as a diode laser.

5. Furniture panel (4) comprising a polymer edge strip (2) fastened thereto, produced in accordance with a method according to any of claims 1 to 4.

## Revendications

1. Procédé servant à installer des bandes de chant au niveau de panneaux de meuble, dans lequel une bande de chant (2) est fondue avec une surface (3) en matière plastique au niveau de ladite surface (3) au moyen d'un laser (1) et est, de préférence par la suite, assemblée au panneau de meuble (4), dans lequel la bande de chant (2) est constituée d'un polymère polaire, en particulier de PMMA, ABS ou PVC, et dans lequel la bande de chant (2) est sans pigments de laser, **caractérisé en ce que** le laser (1) émet une lumière laser avec une longueur d'onde entre 1.100 nm et 2.200 nm, de préférence entre 1.400 nm et 2.000 nm, dans lequel la longueur d'onde choisie est adaptée à la bande d'absorption de la matière plastique, et que la banche de chant (2) est réalisée de manière monocouche, laquelle est assemblée directement au panneau de meuble également polaire.

2. Procédé selon la revendication 1, **caractérisé en ce que** la longueur d'onde se situe
- dans la plage de 1.440 à 1.500 nm ou
- dans la plage de 1.520 à 1.580 nm ou
- dans la plage de 1.620 à 1.680 nm ou
- dans la plage de 1.910 à 1.970 nm.

3. Procédé selon la revendication 1 ou 2, **caractérisé en ce que** la longueur d'onde est adaptée à la bande d'absorption de la matière plastique de sorte que la matière plastique présente pour ladite longueur d'onde un degré d'absorption pour la lumière laser dans la plage de 20 - 80 %, de préférence de 30 - 50 %.

4. Procédé selon l'une quelconque des revendications 1 à 3, **caractérisé en ce que** le laser (1) est réalisé en tant que laser à diodes.

5. Panneau de meuble (4) avec une bande de chant (2) polymère fixée au niveau de celui-ci, fabriquée selon un procédé selon l'une quelconque des revendications 1 à 4.
